(19) Europäisches Patentamt
European Patent Office
Office européen des brevets

(11) Veröffentlichungsnummer: **0 107 067**
**B1**

(12) # EUROPÄISCHE PATENTSCHRIFT

(45) Veröffentlichungstag der Patentschrift: **15.01.86**

(51) Int. Cl.⁴: **C 09 B 31/065,** C 09 B 43/28 // D06P3/06

(21) Anmeldenummer: **83109544.3**

(22) Anmeldetag: **26.09.83**

(54) **Disazofarbstoffe.**

(30) Priorität: **08.10.82 DE 3237369**

(43) Veröffentlichungstag der Anmeldung: **02.05.84 Patentblatt 84/18**

(45) Bekanntmachung des Hinweises auf die Patenterteilung: **15.01.86 Patentblatt 86/3**

(84) Benannte Vertragsstaaten: **CH DE FR GB LI**

(56) Entgegenhaltungen:
**FR-A-1 571 783**
**FR-A-1 604 321**
**FR-A-2 030 035**
**FR-A-2 043 870**
**FR-A-2 103 494**
**US-A-4 055 560**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Nickel, Horst, Dr., Fontanestrasse 23, D-5090 Leverkusen 1 (DE)**

**EP 0 107 067 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der Anmeldung sind Disazofarbstoffe, die in Form der freien Säure der Formel

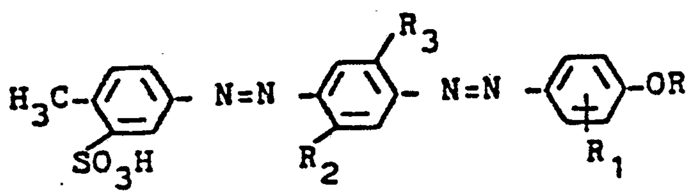

entsprechen, worin
R $C_1$-$C_4$-Alkyl,
$R_1$ H oder $C_1$-$C_4$-Alkyl,
$R_2$/$R_3$ H, $C_1$-$C_4$-Alkyl, $C_1$-$C_4$-Alkoxy oder Chlor bedeuten.
Bevorzugt sind Farbstoffe, die der Formel

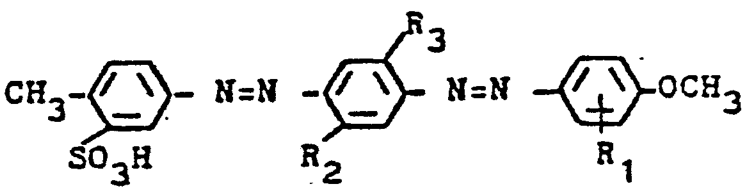

entsprechen, worin
$R_1$ H oder $CH_3$,
$R_2$ H, $CH_3$ oder Chlor und
$R_3$ $CH_3$ oder $OCH_3$ bedeuten.

Die neuen Farbstoffe können selbstverständlich auch in Form ihrer Salze vorliegen.

Als Kationen dieser Salze kommen Alkaliionen, wie Natrium-, Kalium-, Lithium-Ionen oder Ammonium-Ionen,. wie $NH_4$-, Mono-, Di- und Trialkyl- oder Hydroxy-, Alkoxyalkylammonium in Betracht, wobei die Alkylreste ebenfalls 1-4 C-Atome aufweisen.

Auch Mischsalze (z.B. Na/Li oder Na/K oder Na/Ammonium) der neuen Farbstoffe können zur Anwendung kommen.

Die Herstellung der Farbstoffe der Formel (I) erfolgt nach an sich bekannten Methoden (vgl. z.B. US-PS 3 862 119 und 3 951 590 sowie GB-PS 1 201 546) durch Alkylierung der Hydroxyverbindungen der Formel

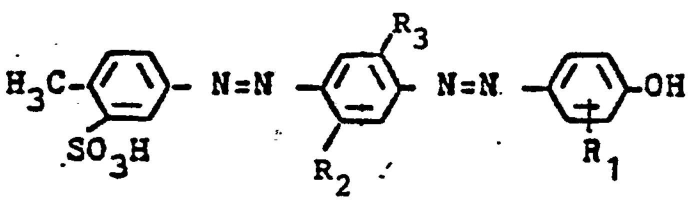

(II)

die in üblicher Weise durch Diazotierung, Kupplung und gegebenenfalls Verseifung der Monoazoverbindung zugänglich sind.

Geeignet sind übliche Alkylierungsmittel.

Die Alkylierung der Hydroxyverbindung (II) mit den erwähnten Alkylierungsmitteln erfolgt in üblicher Weise, beispielhaft in wäßrig-alkalischem Medium oder einem wäßrig-organischen Gemisch (z.B. Wasser-Ethanol oder Propanol oder Isopropanol) im alkalischen pH-Bereich.

Die Farbstoffe sind besonders geeignet zum Färben und Bedrucken von natürlichen und synthetischen amidgruppenhaltigen Fasermaterialien, insbesondere von Polyamid-Fasern unterschiedlicher Provenienz. Sie besitzen eine hohe Farbstärke und zeichnen sich durch sehr gute coloristische Eigenschaften aus.

Hervorzuheben ist die gute Kombinierbarkeit mit vielen handelsüblichen Polyamid-Faserstoffen sowie das hohe Echtheitsniveau (vorzugsweise Naßechtheiten und Lichtechtheit, die auch in den Kombinationsfärbungen erhalten bleibt). Von besonderer Bedeutung ist die Löslichkeit der Farbstoffe und die Beständigkeit der Farbstoff-Lösungen.

Von den strukturell nächstvergleichbaren und beispielhaft in FR-A-2 030 035, 2 103 494 und 2 043 870 beschriebenen bekannten Farbstoffen unterscheiden sich die erfindungsgemäßen Verbindungen durch die charakteristische p-Toluidinsulfonsäure als "Anfangskomponente" in Kombination mit ausgewählten Kupplungskomponenten.

**Bespiel**

0,1 Mol (42,6 g) des Disazofarbstoffs der Formel

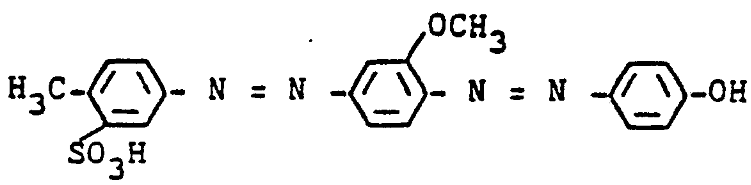

- hergestellt durch Kuppeln von diazotierter 5-Amino-toluol-2-sulfonsäure mit 2-Amino-anisol-N-methansulfonsäure, alkalischer Abspaltung der Methansulfonsäure, Weiterdiazotierung der Aminoazobenzolsulfonsäure und alkalische Kupplung mit Phenol - werden in 300 Teilen Wasser bei 50° C natronalkalisch bei pH 11 gelöst. In diese Lösung tropft man unter starken Rühren bei 50° C und einem pH-Wert von 9-11 42 Vol.-Teile Dimethylsulfat unter gleichzeitiger Zugabe von Natronlauge (20 %ig) bis die Methylierung der Hydroxygruppe beendet ist, was papierchromatographisch verfolgt wird. Der methylierte Farbstoff ist teilweise ausgefallen. Zur Isolierung wird mit Salzsäure neutralisiert und abgesaugt. Die erhaltene Paste wird getrocknet und gemahlen. Man erhält ein dunkles Pulver, das sich in Wasser mit gelber Farbe löst. Der Farbstoff färbt Polyamid-6-Fasern in goldgelben Tönen (C.I. Hue Nr. 4)$\lambda_{max}$ 384 nm.

Führt man die Methylierung wie oben beschrieben statt in natronalkalischem Milieu in Gegenwart von Lithiumhydroxyd durch, so erhält man nach Isolierung durch Aussalzen mit Lithiumchlorid und Trocknung ein dunkles Pulver, das in Wasser gut löslich ist.

Methyliert man in Anwesenheit von Lithiumhydroxyd und isoliert in neutralem Medium durch Sprühtrocknung, so erhält man ein ebenfalls gut wasserlösliches Farbstoffpulver.

Verwendet man als Ausgangsmaterial den Disazofarbstoff mit o-Kresol als phenolischer Endkomponente, so erhält man nach der Methylierung einen Farbstoff, der Polyamid in goldgelben Tönen färbt. ($\lambda_{max}$ 396 nm)

Der methylierte Disazofarbstoff mit m-Kresol als Endkomponente färbt Polyamid in etwas rotstichigerem goldgelben Farbton. ($\lambda_{max}$ 400 nm)

Verwendet man das Gemisch der Disazofarbstoffe mit Phenol und o-Kresol und/oder m-Kresol (1:1 bis 3:1) als Endkomponente, so erhält man nach der Methylierung Farbstoffe mit guter Löslichkeit, die Polyamid in goldgelben Tönen färben.

Wird der Phenol-Disazofarbstoff statt mit Dimethylsulfat mit der äquimolaren Menge Diethylsulfat alkyliert, so erhält man einen Farbstoff, der Polyamid in goldgelben Tönen färbt. ($\lambda_{max}$ 395 nm)

Verwendet man zur Alkylierung anstelle von Dimethylsulfat Methylchlorid (wobei in geschlossenem System gearbeitet wird) so erhält man den gleichen Farbstoff wie oben beschrieben.

In der folgenden Tabelle werden weitere Farbstoffe angeführt, die wie oben angegeben, durch Alkylierung der Hydroxy-Farbstoffe hergestellt werden, wobei in der ersten Spalte die Mittelkomponente, in der zweiten Spalte die Endkomponente, dann der Alkylrest und der Farbton einer Polyamid-6-Färbung mit der Color-Index-Hue-Indication-Number angegeben wird.

Tabelle 1

| Mittel-komponente | Endkomponente | Alkylrest | Ton | C.I. Hue-Indication-No. |
|---|---|---|---|---|
| 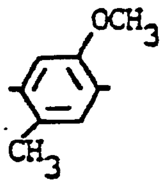 | Phenol | $-CH_3$ | orange | 4-5 $\lambda_{max}$ 386 nm |
| " | Phenol | $-C_2H_5$ | " | 4-5 $\lambda_{max}$ 387 nm |
| " | o-Kresol | $-CH_3$ | " | 4-5 |
| " | m-Kresol | $-CH_3$ | " | 4-5 |
| 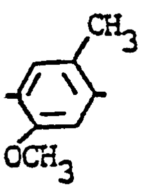 | Phenol | $-CH_3$ | goldgelb | 4-(5) |
| " | m-Kresol | $-CH_3$ | " | 4 |
| 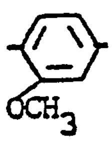 | Phenol | $-CH_3$ | " | 4 |
| " | o-Kresol | $-CH_3$ | " | 4 |
| 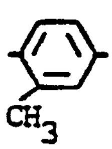 | Phenol | $-CH_3$ | rotstichig gelb | 4 |

| | | | | |
|---|---|---|---|---|
| 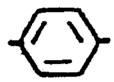 | Phenol | $-CH_3$ | schwach rotstichig gelb | (3)-4 |
| 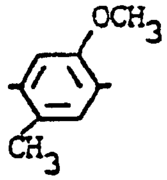 | Phenol | $-CH_3$ | Scharlach | 7 |
| 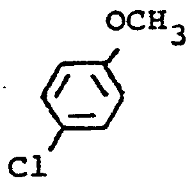 | Phenol | $-CH_3$ | goldgelb | 4-(5) $\lambda_{max}$ 388nm |
| " | o-Kresol | $-CH_3$ | goldgelb | 4-(5) |
| " | m-Kresol | $-CH_3$ | goldgelb | 4-(5) |

**Patentansprüche**

1. Disazofarbstoffe, die in Form der freien Säure der Formel

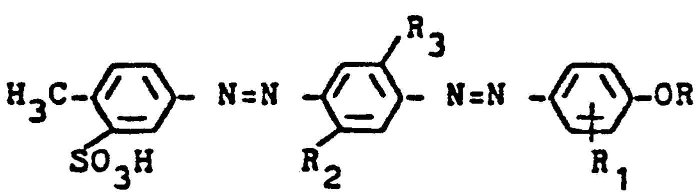

entsprechen, worin
R $C_1$-$C_4$-Alkyl,
$R_1$ H oder $C_1$-$C_4$-Alkyl,
$R_2$/$R_3$ H, $C_1$-$C_4$-Alkyl, $C_1$-$C_4$-Alkoxy oder Chlor bedeuten.

2. Disazofarbstoffe gemäß Anspruch 1, die in Form der freien Säure der Formel

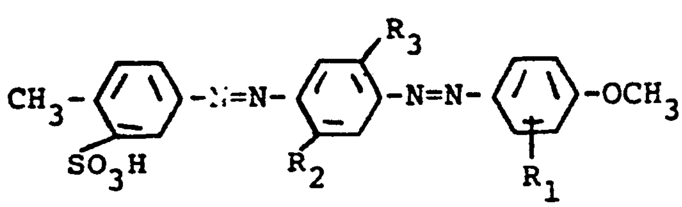

entsprechen,
worin
$R_1$ H oder $CH_3$,
$R_2$ H, $CH_3$ oder Chlor
$R_3$ $CH_3$ oder $OCH_3$ bedeuten.

3. Disazofarbstoff gemäß Anspruch 1 der Formel

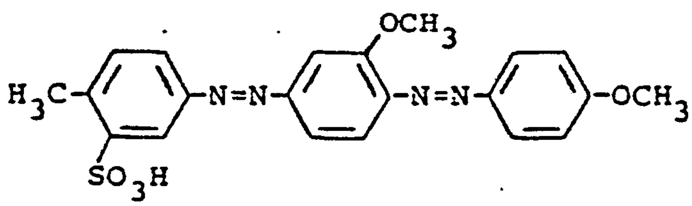

4. Verfahren zur Herstellung von Disazofarbstoffen gemäß Anspruch 1, dadurch gekennzeichnet, daß man Verbindungen der Formel

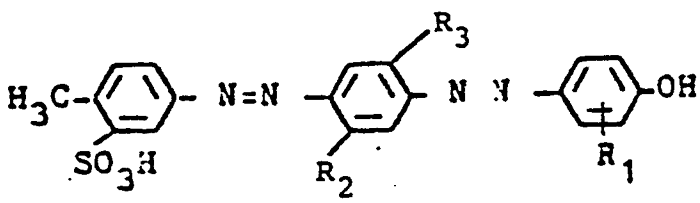

in an sich bekannter Weise an der phenolischen Gruppe alkyliert.

5. Verwendung der Farbstoffe gemäß Anspruch 1 zum Färben von amidgruppenhaltigen Fasern.

## Claims

1. Disazo dyestuffs which, in the form of the free acid, correspond to the formula

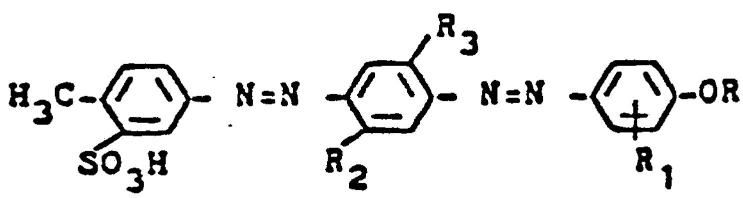

wherein
R denotes $C_1$-$C_4$-alkyl,
$R_1$ denotes H or $C_1$-$C_4$-alkyl and
$R_2$/$R_3$ denote H, $C_1$-$C_4$-alkyl, $C_1$-$C_4$-alkoxy or chlorine.

2. Disazo dyestuffs according to Claim 1 which, in the form of the free acid, correspond to the formula

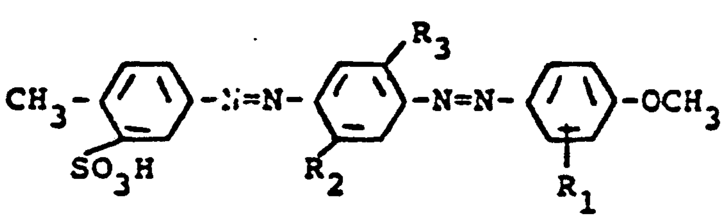

wherein
$R_1$ denotes H or $CH_3$,
$R_2$ denotes H, $CH_3$ or chlorine and
$R_3$ denotes $CH_3$ or $OCH_3$.

3. Disazo dyestuff according to Claim 1, of the formula

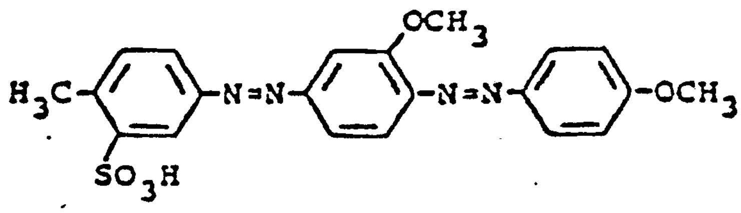

4. Process for the preparation of disazo dyestuffs according to Claim 1, characterised in that compounds of the formula

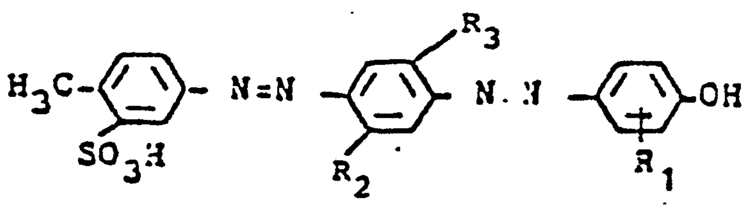

are alkylated on the phenolic group in a manner known per se.

5. Use of the dyestuffs according to Claim 1 for dyeing fibres containing amide groups.

**Revendications**

1. Colorants dis-azoïques qui, à l'état d'acides libres, répondent à la formule

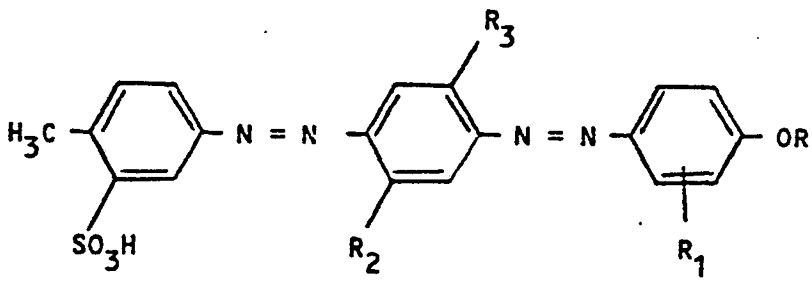

dans laquelle
R represente un groupe alkyle en $C_1$-$C_4$,
$R_1$ represente H ou un groupe alkyle en $C_1$-$C_4$,
$R_2$/$R_3$ representent H, des groupes alkyle en $C_1$-$C_4$, alcoxy en $C_1$-$C_4$ ou le chlore.

2. Colorants dis-azoïques selon la revendication 1, qui, à l'etat d'acides libres, répondent à la formule

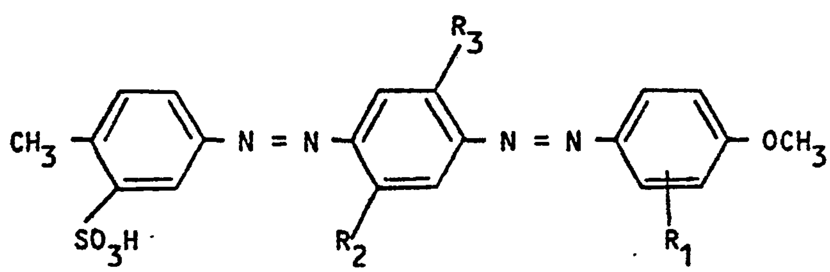

dans laquelle
$R_1$ represente H ou $CH_3$,
$R_2$ represente H, $CH_3$ ou le chlore,
$R_3$ represente $CH_3$ ou $OCH_3$.

3. Colorant dis-azoïque selon la revendication 1 de formule

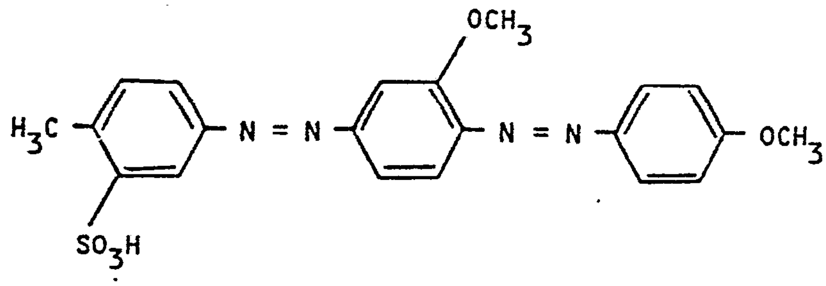

4. Procédé de préparation des colorants dis-azoïques selon la revendication 1, caractérisé en ce que l'on alkyle sur le groupe phénolique, de manière connue en soi, des composés de formule

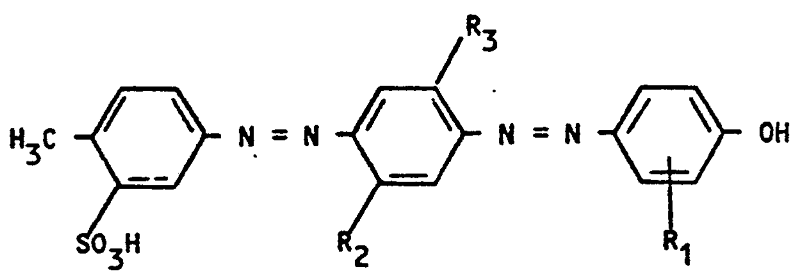

5. Utilisation des colorants selon la revendication 1, pour la teinture de fibres contenant des groupes amide.